# EUROPEAN PATENT SPECIFICATION

(11) **EP 2 279 598 B1**
(45) Date of publication and mention of the grant of the patent: **26.10.2011**
(21) Application number: 08760193.6
(22) Date of filing: 29.05.2008
(51) Int. Cl.: H04L 29/06, H04N 7/173

(54) **IPTV security in a communication network**
IPTV-Sicherheit in einem Kommunikationsnetz
Sécurité IPTV dans un réseau de communication

(43) Date of publication of application: 02.02.2011
(73) Proprietor: Telefonaktiebolaget L M Ericsson (PUBL), 164 83 Stockholm (SE)
(72) Inventor: EDLUND, Peter, SE-147 33 Tumba (SE); ÅSTRÖM, Bo, SE-117 59 Stockholm (SE); LINDHOLM, Fredrik, SE-112 15 Stockholm (SE)
(74) Representative: Mitchell, Matthew Benedict David
(86) International application number: PCT/EP2008/056602
(87) International publication number: WO 2009/143891

(56) References cited:
- WO-A-2007/008120
- WO-A-2007/085186
- WELDON: "IMS and IPTV, Perfect Together" INTERNET CITATION, [Online] XP002418650 Retrieved from the Internet: URL:http://ipcommunications.tmcnet.com/hot -topics/ims/articles/280-ims-ip tv-perfect-together.htm> [retrieved on 2007-02-06]
- ANNE BODZINGA ET AL: "Interworking IPTV Services with IMS" TELECOMMUNICATIONS NETWORK STRATEGY AND PLANNING SYMPOSIUM, 2006. NETW ORKS 2006. 12TH INTERNATIONAL, IEEE, PI, 1 November 2006 (2006-11-01), pages 1-5, XP031014820 ISBN: 978-1-4244-0952-5

## Description

### TECHNICAL FIELD

The invention relates to the field of IPTV Security in a Communication Network, and in particular to the field of setting up a secure IPTV session.

### BACKGROUND

TV services broadcast over an IP network are referred to as IPTV. IPTV is typically broadcast using a broadband access network, in which channels are transmitted over a broadband network from a super head-end down to an end-user's set top box (STB). An example of an IPTV service is Broadcast TV, in which the most common IPTV channels, as well as additional channels with low penetration, are transmitted over a broadband network from a super head-end down to an end-user's set top box (STB). In order to minimize the bandwidth required for these transmissions it is desirable to use multicast techniques through the network.

Similarly, in mobile networks it is desirable to use broadcast/multicast delivery of Mobile TV (MTV). Multimedia Broadcast Multicast Service (MBMS) and Digital Video Broadcasting - Handheld (DVB-H) are examples of MTV broadcast technologies. A mobile telephone (such as User Equipment, UE) having an MTV client can be thought of as an equivalent to a STB in MTV implementations that receive content from a super head-end.

In a typical arrangement the content is delivered by a Media Delivery Function (MDF) which is a content delivery server controlled by an IP Multimedia Subsystem (IMS) Application Server (AS) for mobile TV (using a Multimedia Broadcast Multicast Service, MBMS, bearer or a Packet Switched Service, PSS, bearer) or an IMS AS for IPTV (using unicast or multicast delivery).

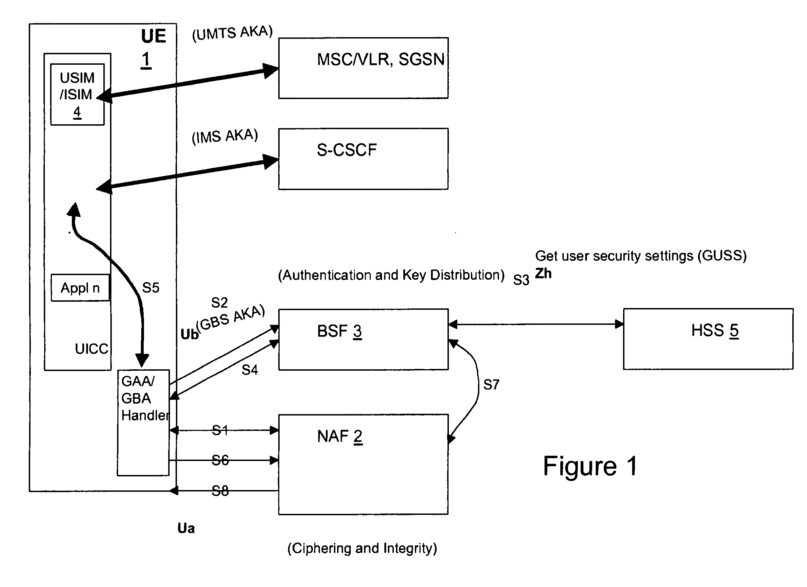

The following description refers to a UE for simplicity, although it will be appreciated that it equally applies where IPTV is received at another type of IPTV receiver such as a STB. Referring to Figure 1 herein, and before communication between the MDF and the UE 1 can start, the UE 1 and the content delivery control function (a Network Application Function, NAF 2, which may be a MTV AS or IPTV AS) must participate in a Generic Bootstrapping Authentication (GBA) procedure (shown in steps S1 to S8) to establish GBA keys (Ks_naf from which MUK and MRK are derived. Ks_naf is described below) for authentication and service protection.

The result of a successful GBA procedure is the establishment of a bootstrapping transaction identifier (BTID), generated by a Bootstrapping Server Function (BSF) 3, and a shared key, Ks_Naf that is locally generated by a USIM/SIM 4 in the UE 1 during bootstrapping (S5). BTID is pulled by the UE 1 from the BSF 3 by using HTTP, shown in step S4 of Figure 1. The Ks_Naf and B_TID are stored as a part of the UE context in a secured area in the UE (S4). Ks_Naf is available for later use to derive application specific keys (MUK, MRK) and to encrypt Long Term keys (MSK) when delivered to the UE 1.

The BSF 3 retrieves a content key (Ck) and an integrity key (Ik), which are sent as part of an Authentication Vector from a Home Subscriber Server (HSS) 5 during the GBA procedure. Ks_naf is calculated by the BSF 3 by concatenating Ck and Ik (and a similar operation is performed by the USIM/ISIM 4 in the UE 1) and is stored at the BSF 3 for future reference by the UE 1.

In order to retrieve data delivered using HTTP from an MTV AS/IPTV AS/BM-SC (NAF), the UE must first be authenticated by the MTV AS. Examples of such data include an Electronic Programme Guide (EPG) or an Electronic Service Guide (ESG). To authenticate the UE, the UE signals the BTID and Ks_naf in an HTTP request (HTTP digest authentication as defined in RFC 2617) sent from the UE 1 to the MTV AS.

When a UE 1 is involved in an HTTP signalling procedure where GBA is used for authentication purposes, the UE 1 interacts with a functional entity called the Authentication Proxy (AP), not shown in Figure 1. The AP knows the BTID that represents the UE 1 during this process and the Ks_naf that corresponds to the BTID.

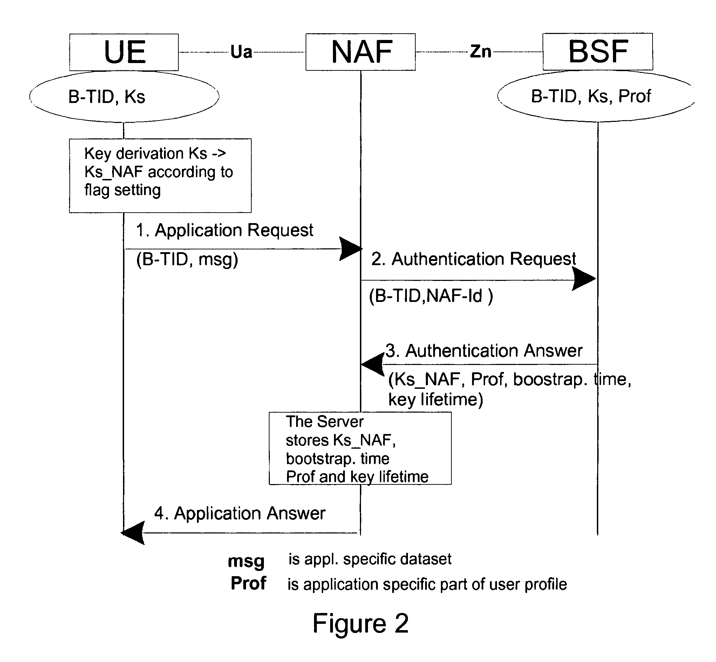

Referring to Figure 2, the procedure by which a node such as NAF retrieves long term keys is illustrated. MTV signalling procedures require the delivery of long-term keys to protect the IPTV content that is to be sent to the UE 1. During these signalling procedures, the UE 1 interacts with the MTV AS, which is not aware of the BTID used in earlier signalling procedures. However, the MTV AS requires Ks_naf to use it for encryption of the long-term content keys as part of the content access procedures. However, the MTV-AS does not have access to the Ks_naf, which is stored at the BSF 2, and so this is currently not possible.

WO 2007/085186 describes a media stream key management method, but does not provide a way of protecting keys sent to the UE. WO 2007/008120 is concerned with improving privacy protection and authentication, but requires that a NAF is contacted each time the UE must be authenticated, leading to wasteful signalling.

### SUMMARY

The inventors have realised that there is a problem in authenticating a User Equipment or other IPTV receiving device before starting a session. A method is proposed for providing a Mobile TV Application Server with a BTID associated with the UE and allowing the MTV AS to act as a Network Application Function in the GBA architecture.

According to a first aspect of the invention, there is provided a method of setting up a secure IPTV session. An Application Server (AS) receives an invite message from an IPTV receiving node such as a mobile telephone or a Set Top Box (STB) to set up an IPTV session. The invite message includes a Bootstrapping Transaction Identifier (BTID) associated with the receiving node. The AS sends an authentication request to a Service Access Protection Server, the authentication request including the BTID. The AS then receives from the Service Access Protection Server an authentication response, which includes a long term key associated with the IPTV receiving node, the long term key having been previously provided to the IPTV receiving node. A request is sent to an IPTV content provider node, the request identifying the IPTV receiving node. The AS then encrypts a media encryption key that is used to encrypt the media sent by the IPTV content provider, using the received long term key. An invite response is then sent to the IPTV receiving node, the response including the encrypted media encryption key. The invention provides the AS with a long term key which can be used to encrypt the media encryption key.

As an option, the invite message is a Session Initiation Protocol (SIP) Invite message, and the BTID is included in a Proxy-Authorization header. The Service Access Protection Server is optionally a Bootstrapping Server Function (BSF). The invention is particular suitable for use in the filed of Mobile IPTV, and so as another option, the IPTV session is a Mobile IPTV session, and the AS is a Mobile IPTV AS.

Optionally, the IPTV session is either a linear IPTV broadcast, a linear IPTV unicast, or a Video on Demand unicast.

Optionally, if the IPTV session is a unicast than the media encryption key is a content key, and if the IPTV session is a broadcast then the media encryption key is a group key.

In an optional embodiment, the media encryption key is sent from the AS to the IPTV content provider node, and in an alternative embodiment the media encryption key is received at the AS from the IPTV content provider node. The media encryption key may be sent from the AS to the IPTV content provider node for subsequent use by the IPTV content provider node in encrypting media send to the IPTV receiving node. Alternatively, where the media encryption key is generated by the IPTV content provider node, it provides it to the AS to allow the AS to encrypt it using the long term key and send it to the IPTV receiving node. Where the media encryption key is a content key, the AS optionally sends it encrypted to the IPTV content provider node.

According to a second aspect of the invention, there is provided an AS. The AS comprises a first receiver for receiving an invite message from an IPTV receiving node to set up an IPTV session. The invite message includes a BTID associated with the IPTV receiving node. A first transmitter is provided for sending an authentication request to a Service Access Protection Server, the authentication request including the BTID. A second receiver is provided for receiving from the Service Access Protection Server an authentication response, the authentication response including a long term key associated with the IPTV receiving node. Note that the long term key has already been provided to the IPTV receiving node. A second transmitter is used for sending a request to an IPTV content provider node, the request identifying the IPTV receiving node. A processor is provided for encrypting a media encryption key using the received long term key. The media encryption key is the key used by the IPTV content provider node for encrypting IPTV content sent to the IPTV receiver node. A third transmitter is provided for sending an invite response message to the IPTV receiving node, the invite response message including the encrypted media encryption key. This allows the IPTV receiving node to access the media encryption key for decrypting media subsequently sent to it from the IPTV content provider node.

The AS optionally further comprises a third receiver for receiving a message from the IPTV content provider node that includes the media encryption key, in a scenario where the IPTV content provider node generates the media encryption key. Alternatively, the second transmitter is arranged to send the media encryption key in the request to the IPTV content provider node for subsequent use by the IPTV content provider node in encrypting media sent to the IPTV receiving node.

As an option, the invite message is a SIP Invite message, and the BTID is included in a Proxy-Authorization header. The AS is optionally a Mobile IPTV AS and the IPTV session is a Mobile IPTV session. The IPTV session is optionally either a linear IPTV broadcast, a linear IPTV unicast, or a Video on Demand unicast.

According to a third aspect of the invention, there is provided an IPTV receiving node that comprises a memory for storing a BTID and a long term key associated with the IPTV receiving node. A transmitter is provided for sending to an AS an invite message for initiating an IPTV session, the invite message including the BTID. A first receiver is provided for receiving from the AS a response message, the response message including a media encryption key encrypted using the long term key. This can be decrypted using a first processor and the stored long term key. A second receiver is provided for receiving IPTV media content sent from an IPTV content provider node, the IPTV media content having been encrypted using the media encryption key. A second processor is then used for decrypting the IPTV media content using the decrypted media encryption key. This allows a viewer to view the IPTV media.

As an option, the IPTV receiving node is User Equipment. As a further option, the invite message is a SIP Invite message, and the BTID is included in a Proxy-Authorization header.

### BRIEF DESCRIPTION OF THE DRAWINGS

Figure 1 illustrates schematically in a block diagram a Generic Bootstrapping Authentication architecture and signalling;
Figure 2 is a signalling diagram showing the signalling required for a NAF to obtain a long term key;
Figure 3 is a signalling diagram showing the signalling required to set up a broadcast IPTV channel with an MTV client according to an embodiment of the invention;
Figure 4 is a signalling diagram showing the signalling required to set up a Video on Demand unicast session according to an embodiment of the invention;

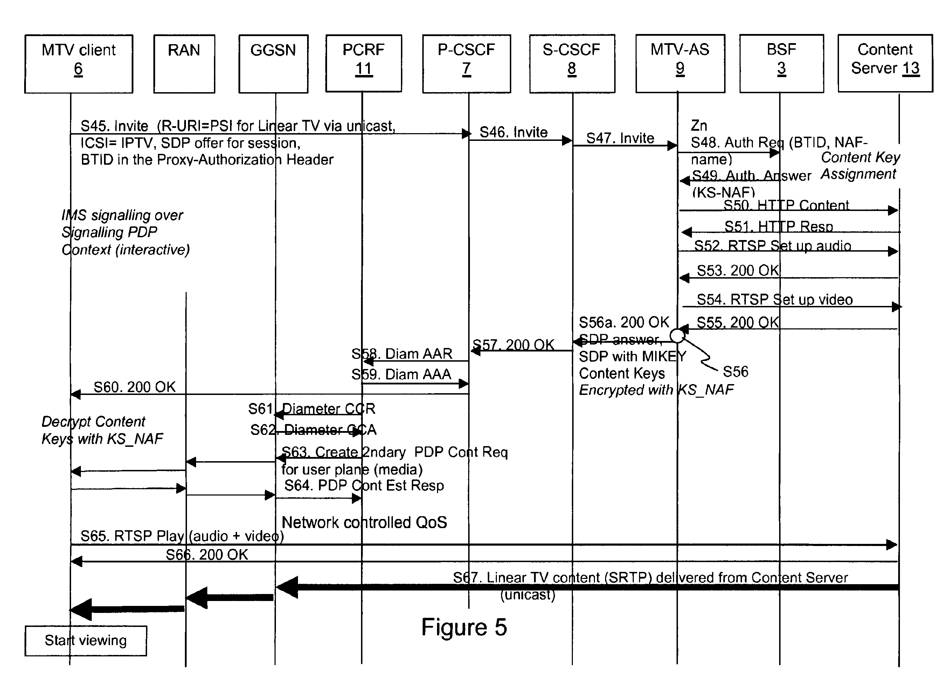

Figure 5 is a signalling diagram showing the signalling required to set up a linear TV unicast session according to an embodiment of the invention;
Figure 6 illustrates schematically in a block diagram an Application Server according to an embodiment of the invention; and
Figure 7 illustrates schematically in a block diagram in IPTV receiving node according to an embodiment of the invention.

### DETAILED DESCRIPTION

When a terminal such as a UE (or any other receiving node for receiving IPTV) wishes to access an IPTV channel (which may be broadcast, unicast, multicast, Video on Demand or any other type of deliver that requires media content protection), it sends a SIP Invite message. In an IMS network, the SIP Invite message is sent to a Proxy-Call Session Control Function (P-CSCF). The SIP Invite message is routed to an Application Server (AS) such as a Mobile TV Application Server (MTV AS). According to the invention, the UE includes BTID in a Proxy-Authorization-Header in the SIP Invite message. The BTID allows the MTV AS to retrieve the Ks_naf from the BSF, and the MTV AS can then use the Ks_naf to encrypt long-term content keys when they are delivered to the UE.

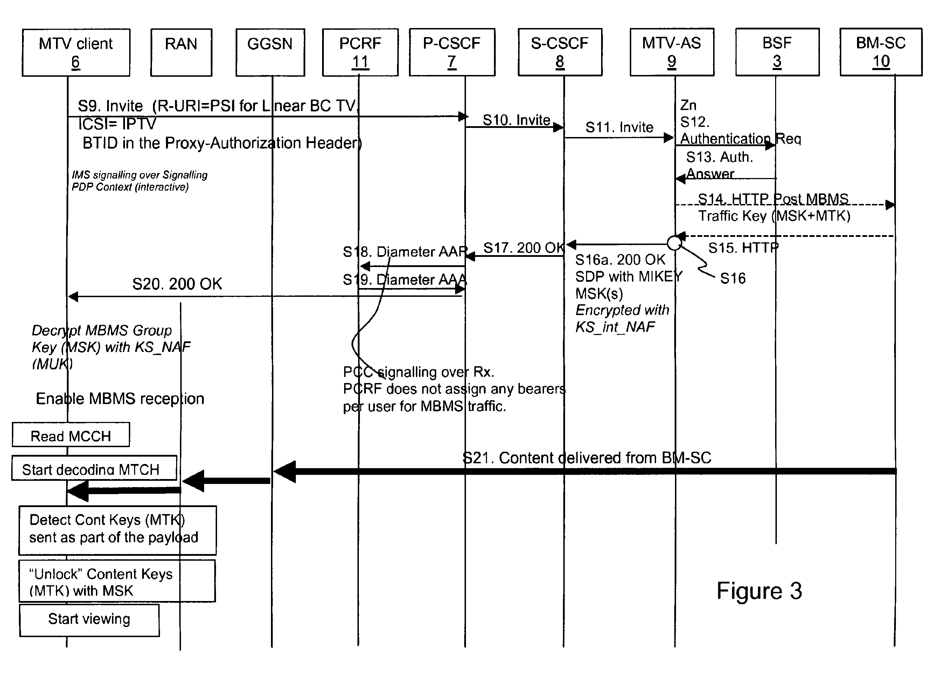

Referring now to Figure 3, there is shown signalling to set up a linear TV broadcast with an MTV client 6 according to a first specific embodiment of the invention. The broadcast in this example is in the context of an MTV environment, and so the MTV client 6 is part of a User Equipment 1. It will be appreciated that the following signalling may be modified to set up a linear TV broadcast with a different IPTV receiving node, such as a STB. The following numbering corresponds to the numbering in Figure 2.

S9. The MTV client 6 sends a SIP Invite message to a P-CSCF 7. The SIP Invite message includes an indication that a Linear broadcast IPTV delivery is required. The BTID, which has previously been provided to the UE in a GBA bootstrappoing procedure, is included in SIP message Proxy-Authorization Header.

S10. The SIP Invite is forwarded from the P-CSCF 7 to a Serving-Call Session Control Function (S-CSCF) 8 in the IMS network.

S11. The S-CSCF 8 forwards the SIP invite to the MTV AS 9.

S12-13. The MTV AS 9 uses the received BTID to authenticate the MTV client 6 with the BSF 3, and to retrieve Ks_naf and Ks_naf specific attributes from the BSF 3. Such attributes include Ks_naf life time validity period, a timestamp and so on.

S14-15. The MTV AS 9, provides a MSK (MBMS Session Key) and a MTK (MBMS Traffic Key) for encryption in a BM-SC 10, or MTK MSK encrypted together with MTK or (MSK) and MBMS Traffic Keys (MTK). The BM-SC 10 is responsible for providing the linear broadcast TV to the MTV client 6 and distribution of updated traffic keys to clients accessing the MBMS session.

S16. The MTV AS 9 encrypts the session keys using the retrieved Ks_naf.

S16a. A SIP 200 OK message is sent from the MTV AS 9 to the S-CSCF 8, the 200 OK message including the session keys MSK encrypted using the retrieved Ks_naf.

S17. The SIP 200 OK message is sent from the S-CSCF 8 to the P-CSCF 7.

S18-19. IMS Policy and Charging Control (PCC) functionality is used, although the PCRF 11 does not perform any policy enforcement or resource reservation or assignment of a bearer (defined by QoS requirements) for the broadcast or multicast IPTV delivery.

S20. The SIP 200 OK message is sent from the P-CSCF 7 to the MTV client 6, providing the MTV client with the session keys MSK.

S21. Encrypted media content is delivered from the BM-SC 10 to the MTV client 6. The MTV client 6 uses the received MSK to decrypt the content keys that are sent as part of the media content, which allows the MTV client 6 to decrypt the media content. The end user can then view the media content.

It should be noted that content keys may subsequently be refreshed. This is performed by including an MSK encrypted traffic key MTK in the media data sent to the MTV client.

The first specific embodiment of the invention allows the MTV AS 6 to receive the BTID associated with a UE and the key material so that the MTV AS can act as a NAF in the GBA architecture. The MTV AS is therefore provided with the BTID which is subsequently used to retrieve Ks_naf from the BSF 3, which is in turn used to encrypt session keys MSK for use by the MTV client 6.

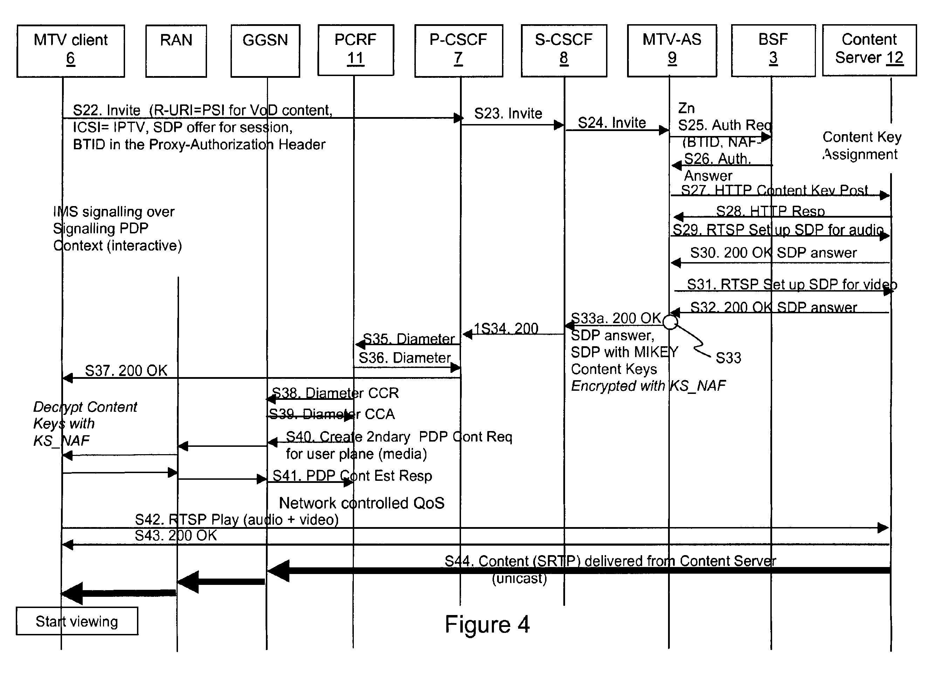

Turning now to Figure 4, there is illustrated signalling to set up a Video on Demand (VoD) unicast according to a second specific embodiment of the invention. The following numbering corresponds to the numbering in Figure 3:
S22. The MTV client 6 sends a SIP Invite message to a P-CSCF 7. The SIP Invite message includes an indication that VoD IPTV delivery is required. The BTID, which has previously been provided to the UE in a GBA bootstrapping procedure, is included in SIP message Proxy-Authorization Header.
S23. The SIP Invite is forwarded from the P-CSCF 7 to a Serving-Call Session Control Function (S-CSCF) 8 in the IMS network.
S24. The S-CSCF 8 forwards the SIP invite to the MTV AS 9.
S25-26. The MTV AS 9 uses the received BTID to authenticate the MTV client 6 with the BSF 3, and to retrieve Ks_naf and Ks_naf specific attributes from the BSF 3. Such attributes include Ks_naf life time validity period, a timestamp and so on.
S27-28. The MTV AS 9 and a Content Server 12 for providing the VoD media to the MTV client 6 negotiate content keys.
S29-S32. The MTV AS 9 and the Content Server 12 configures the Content Server 12 regarding content delivery over a RTP/UDP connection by invocation of an RTSP setup procedure for audio and video streams between the Content Server 12 and the terminal.
S33. The MTV AS 9 encrypts the content keys using the retrieved Ks_naf.
S33a. A SIP 200 OK message is sent from the MTV AS 9 to the S-CSCF 8, the 200 OK message including the content keys encrypted using the retrieved Ks_naf.
S34. The SIP 200 OK message is sent from the S-CSCF 8 to the P-CSCF 7.
S35-36. IMS Policy and Charging Control (PCC) functionality performs policy control and enforcement and resource reservation. Based on PCC rules the PCRF 11 instructs the GGSN to activate a secondary PDP context for the bearer to carry the VoD stream for the unicast IPTV delivery.
S37. The SIP 200 OK message is sent from the P-CSCF 7 to the MTV client 6, providing the MTV client with the content keys, which the MTV client 6 can decrypt using Ks_naf.
S38-S41. IMS PCC functionality is used to assign an appropriate bearer (QoS defined) for the unicast IPTV delivery. These steps show shows a network controlled bearer establishment/PDP context, but a UE controlled bearer establishment would be equally applicable for the invention.
S42. The MTV client 6 requests the VoD content from the Content Server 12.
S43. The Content Server replies with a 200 OK message.
S44. Encrypted VoD media content is delivered from the Content Server 12 to the MTV client 6. The MTV client 6 uses the decrypted content keys to decrypt the media content. The end user can then view the media content.

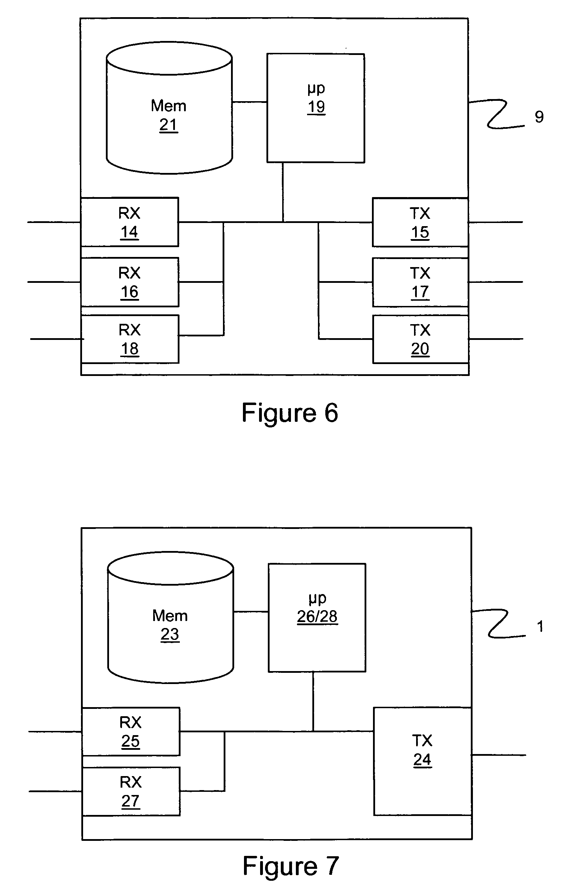

Turning now to Figure 6, there is illustrated signalling to set up a linear TV unicast according to a third specific embodiment of the invention. The following numbering corresponds to the numbering in Figure 4:
S45. The MTV client 6 sends a SIP Invite message to a P-CSCF 7. The SIP Invite message includes an indication that unicast linear delivery is required. The BTID, which has previously been provided to the UE in a GBA bootstrapping procedure, is included in SIP message Proxy-Authorization Header.
S46. The SIP Invite is forwarded from the P-CSCF 7 to a Serving-Call Session Control Function (S-CSCF) 8 in the IMS network.
S47. The S-CSCF 8 forwards the SIP invite to the MTV AS 9.
S48-49. The MTV AS 9 uses the received BTID to authenticate the MTV client 6 with the BSF 3, and to retrieve Ks_naf and Ks_naf specific attributes, such as a Ks_naf lifetime validity period and a timestamp from the BSF 3.
S50-51. The MTV AS 9 and a Content Server 13 for providing the VoD media to the MTV client 6 negotiate content keys.
S52-S55. The MTV AS 9 and the Content Server 13 negotiate RTSP setup for audio and video.
S56. The MTV AS 9 encrypts the session keys using the retrieved Ks_naf.
S56a. A SIP 200 OK message is sent from the MTV AS 9 to the S-CSCF 8, the 200 OK message including the content keys encrypted using the retrieved Ks_naf.
S57. The SIP 200 OK message is sent from the S-CSCF 8 to the P-CSCF 7.
S58-59. IMS Policy and Charging Control (PCC) functionality performs policy control and enforcement and resource reservation. Based on PCC rules the PCRF 11 instructs GGSN to activate secondary PDP context for the bearer to carry the unicast stream for the IPTV delivery.
S60. The SIP 200 OK message is sent from the P-CSCF 7 to the MTV client 6, providing the MTV client with the content keys, which the MTV client 6 can decrypt using Ks_naf.
S61-S64. IMS PCC functionality is used to assign an appropriate bearer (QoS defined) for the unicast IPTV delivery. These steps show shows a network controlled bearer establishment/PDP context, but a UE controlled bearer establishment would be equally applicable for the invention.
S65. The MTV client 6 requests the linear unicast content from the Content Server 13.
S66. The Content Server 13 replies with a 200 OK message.
S67. Encrypted unicast linear IPTV media is delivered from the Content Server 13 to the MTV client 6. The MTV client 6 uses the decrypted content keys to decrypt the media content. The end user can then view the media content.

Referring now to Figure 6, there is illustrated schematically an Application Server according to an embodiment of the invention. The Application Server is an MTV AS 9, as described above. The MTV AS 6 is provided with a first receiver 14 for receiving the SIP Invite message from the MTV client 6. As described above, the SIP Invite message includes the BTID in the Proxy-Authorization header. A first transmitter 15 is provided for sending an authentication request to the BSF 3, and a second receiver 16 is provided for receiving a response form the BSF 3. The response includes Ks_naf. A second transmitter 17 is provided for sending a request, which may include a media encryption key such as an MSK+MTK, or an (MSK encrypted MTK)+MTK to a BM-SC 10 or a Content Server 13, and a third receiver 18 is provided for receiving a response, which may include a media encryption key from the IP television content provider node. A processor 19 is used for encrypting the media encryption key using the received Ks_naf, and a third transmitter 20 is provided for sending a SIP 200 OK to the MTV client 6, the 200 OK including the Ks_naf encrypted media encryption key. Of course, the transmitters may all be embodied in a single transmitter, and the receivers may all be embodied in a single receiver. A memory 21 is also provided for storing information such as the received BTID and Ks_naf.

Figure 7 is in IPTV receiving node according to an embodiment of the invention. The IPTV receiving node, in an MTV network as described above, is a UE comprising an MTV client 6. The UE 22 is provided with a memory 23 for storing the BTID and Ks_naf provided in the GBA procedures. The memory also stores information associated with Ks_naf, such as the Ks_naf lifetime validity period. A transmitter 24 is provided for sending a SIP Invite to the MTV AS 9, the SIP Invite including the BTID in a Proxy-Authorization header. A first receiver 25 is provided for receiving a SIP 200 OK from the MTV AS 9, the SIP 200 OK including media encryption keys encrypted using Ks_naf. A first processor 26 is provided for decrypting the media encryption keys using Ks_naf retrieved from the memory 23. A second receiver 27 is provided for subsequently receiving IPTV media content sent from a content server 13 or BM-SC 10, the content being encrypted using the media encryption keys. A second processor 28 is provided for decrypting the IPTV media content using the decrypted media encryption key. Of course, the two processors may be embodied in a single processor, and the two receivers may be embodied in a single receiver.

The invention ensures that an Application Server such as an MTV AS receives the BTID during content access procedures. This allows the MTV AS to retrieve the Ks_naf key from the BSF, and reduces signalling required as the NAF does not need to be involved. Ks_naf is used by the MTV AS to encrypt service keys (MSK), which are part of the content protection. This provides a single common IMS procedure to retrieve the Ks_naf and store it at the MTV AS/IPTV for service and content protection, independent of type of service access. A single SIP session is required to set up the service and to distribute content keys derived from Ks_naf to the MTV client. Furthermore, the BTID provided to the client in the GBA procedure can be re-used for several types of signalling, such as HTTP And SIP signalling.

It will be appreciated by the person of skill in the art that various modifications may be made to the above-described embodiments without departing from the scope of the present invention. For example, whilst the above description discusses the invention in the context of a Mobile TV network, it will be appreciated that the invention also applies to fixed access IPTV networks. The invention may find use in services such as multicast/broadcast conferencing services in Push to Talk over Cellular (PoC) networks.

The following abbreviations have been used in this specification:
- BM-SC:: Broadcast Multicast Service Centre
- BSF:: Bootstrapping Server Function
- BTID:: Bootstrapping Transaction ID
- CK:: Content Key
- EPG:: Electronic Programme Guide

- ESG:: Electronic Service Guide
- GAA:: Generic Authentication Architecture
- GBA:: Generic Bootstrapping Authentication
- HSS:: Home Subscriber Server
- HTTP:: Hypertext Transfer Protocol
- IK:: Integrity Key
- IPTV AS:: IPTV Application Server
- Ks_naf:: Long-term key generated by BSF as a result of the GBA procedure
- Linear BC TV:: Tv channel distributed over Broadcast bearer
- MBMS:: Multimedia Broadcast Multicast Service
- MCF:: Media Control Function
- MDF:: Media Delivery Function
- MSK:: MBMS Session Key
- MTK:: MBMS Traffic Key
- MTV AS:: Mobile TV Application Server
- MUK:: MBMS User Key
- NAF:: Network Application Function
- SRTP:: Secure Real Time Transport Protocol
- STB:: Set Top Box
- UE:: User Equpiment
- URI:: Uniform Resource Identifier
- VoD:: Video on Demand

## Claims

1. A method of setting up a secure IP television session, the method **characterized by** comprising:
receiving (S11; S23; S47), at an Application Server (9), an invite message from an IP television receiving node (1) to set up an IP television session, the invite message including a Bootstrapping Transaction Identifier associated with the receiving node;
sending (S12; S 25; S48) an authentication request to a Service Access Protection Server, the authentication request including the Bootstrapping Transaction Identifier;
receiving (S13; S26; S40) from the Service Access Protection Server an authentication response, the authentication response including a long term key associated with the IP television receiving node, the long term key having been previously provided to the IP television receiving node;
sending (S14; S27; S50) a request to an IP television content provider node, the request identifying the IP television receiving node;
encrypting (S16; S33; S56) a media encryption key using the received long term key, the media encryption key for use by the IP television content provider node for encrypting media; and
sending (S16a; S33a; S56a) an invite response message to the IP television receiving node, the invite response message including the encrypted media encryption key.

2. The method according to claim 1, wherein the invite message is a Session Initiation Protocol Invite message, and the Bootstrapping Transaction Identifier is included in a Proxy-Authorization header.

3. The method according to claim 1 or 2, wherein the IP television session is a Mobile IP television session, and the Application Server is a Mobile IP television Application Server.

4. The method according to claims 1, 2 or 3, wherein the IP television session is selected from one of a linear IP television broadcast, a linear IP television unicast, and a Video on Demand unicast.

5. The method according to any one of claims 1 to 4, wherein the Service Access Protection Server is a Bootstrapping Server Function.

6. The method according to any one of claims 1 to 5, wherein the media encryption key is selected from one of a group key and a content key.

7. The method according to any one of claims 1 to 6, wherein the media encryption key is sent from the Application Server to the IP Television content provider node.

8. The method according to any one of claims 1 to 6, wherein the media encryption key is received at the Application Server from the IP Television content provider node.

9. An Application Server (9) **characterized by** comprising:
a first receiver (14) for receiving an invite message from an IP television receiving node (1) to set up an IP television session, the invite message including a Bootstrapping Transaction Identifier associated with the IP television receiving node;
a first transmitter (15) for sending an authentication request to a Service Access Protection Server, the authentication request including the Bootstrapping Transaction Identifier;
a second receiver (16) for receiving from the Service Access Protection Server an authentication response, the authentication response including a long term key associated with the IP television receiving node, the long term key having been previously provided to the IP television receiving node;
a second transmitter (17) for sending a request to an IP television content provider node, the request identifying the IP television receiving node;
a processor (19) for encrypting a media encryption key using the received long term key; and
a third transmitter (20) for sending an invite response message to the IP television receiving node, the invite response message including the encrypted media encryption key.

10. The Application Server according to claim 9, further comprising a third receiver (18) for receiving from the IP television content provide node a message including the media encryption key.

11. The Application Server according to claim 9, wherein the second transmitter is arranged to send the media encryption key in the request to the IP television content provider node.

12. The Application Server according to any one of claims 9 to 11, wherein the Application Server is a Mobile IP television Application Server and the IP television session is a Mobile IP television session.

13. The Application Server according to any one of claims 9 to 12, wherein the IP television session is selected from one of a linear IP television broadcast, a linear IP television unicast, and a Video on Demand unicast.

14. An IP television receiving node (1) **characterized by** comprising:
a memory (23) for storing a Bootstrapping Transaction Identifier and a long term key associated with the IP television receiving node;
a transmitter (24) for sending to an Application Server an invite message for initiating an IP television session, the invite message including the Bootstrapping Transaction Identifier;
a first receiver (25) for receiving from the Application Server a response message, the response message including a media encryption key encrypted using the long term key;
a first processor (26) for decrypting the media encryption key using the stored long term key;
a second receiver (27) for receiving IP television media content sent from an IP television content provider node, the IP television media content being encrypted using the media encryption key;
a second processor (28) for decrypting the IP television media content using the decrypted media encryption key.

15. The IP television receiving node according to claim 14, wherein the IP television receiving node is User Equipment.

## Patentansprüche

1. Verfahren zur Einrichtung einer sicheren IP-Fernsehsitzung, wobei das Verfahren **dadurch gekennzeichnetist, dass** es umfasst:
in einem Anwendungsserver (9) erfolgendes Empfangen (S11; S23; S47) einer Einladungsnachricht von einem IP-Fernsehempfangsknoten (1), um eine IP-Fernsehsitzung einzurichten, wobei die Einladungsnachricht eine Bootstrapping-Transaktionskennung aufweist, die dem Empfangsknoten zugeordnet ist;
Senden (S12; S25; S48) einer Authentifizierungsanforderung an einen Dienstzugangsschutzserver, wobei die Authentifizierungsanforderung die Bootstrapping-Transaktionskennung aufweist;
Empfangen (S 13; S26; S40) einer Authentifizierungsantwort vom Dienstzugangsschutzserver, wobei die Authentifizierungsantwort einen Langzeitschlüssel aufweist, der dem IP-Fernsehempfangsknoten zugeordnet ist, wobei der Langzeitschlüssel vorher dem IP-Fernsehempfangsknoten zur Verfügung gestellt worden ist;
Senden (S14; S27; S50) einer Anforderung an einen IP-Fernsehinhaltsanbieterknoten, wobei die Anforderung den IP-Fernsehempfangsknoten angibt;
Verschlüsseln (S16; S33; S56) eines Medienverschlüsselungsschlüssels unter Verwendung des empfangenen Langzeitschlüssels, wobei der Medienverschlüsselungsschlüssel zur Verwendung durch den IP-Fernsehinhaltsanbieterknoten zum Verschlüsseln von Medien bestimmt ist; und
Senden (S16a; S33a; S56a) einer Einladungsantwortnachricht an den IP-Fernsehempfangsknoten, wobei die Einladungsantwortnachricht den verschlüsselten Medienverschlüsselungsschlüssel aufweist.

2. Verfahren nach Anspruch 1, wobei die Einladungsnachricht eine Sitzungseinleitungsprotokoll-Einladungsnachricht ist und die Bootstrapping-Transaktionskennung in einen Proxy-Autorisierungsheader eingeschlossen ist.

3. Verfahren nach Anspruch 1 oder 2, wobei die IP-Fernsehsitzung eine Mobil-IP-Fernsehsendung ist und der Anwendungsserver ein Mobil-IP-Fernsehanwendungsserver ist.

4. Verfahren nach Anspruch 1, 2 oder 3, wobei die IP-Fernsehsitzung aus einem der folgenden ausgewählt wird: eine lineare IP-Fernsehrundsendung, eine lineare IP-Fernsehdirektsendung und eine Video-on-Demand-Direktsendung.

5. Verfahren nach einem der Ansprüche 1 bis 4, wobei der Dienstzugangsschutzserver eine Bootstrapping-Serverfunktion ist.

6. Verfahren nach einem der Ansprüche 1 bis 5, wobei der Medienverschlüsselungsschlüssel aus einem der folgenden ausgewählt wird: ein Gruppenschlüssel und ein Inhaltsschlüssel.

7. Verfahren nach einem der Ansprüche 1 bis 6, wobei der Medienverschlüsselungsschlüssel vom Anwendungsserver zum IP-Fernsehinhaltsanbieterknoten gesendet wird.

8. Verfahren nach einem der Ansprüche 1 bis 6, wobei der Medienverschlüsselungsschlüssel im Anwendungsserver vom IP-Fernsehinhaltsanbieterknoten empfangen wird.

9. Anwendungsserver (9), **dadurch gekennzeichnet, dass** er umfasst:
einen ersten Empfänger (14) zum Empfangen einer Einladungsnachricht von einem IP-Fernsehempfangsknoten (1), um eine IP-Fernsehsitzung einzurichten, wobei die Einladungsnachricht eine Bootstrapping-Transaktionskennung aufweist, die dem IP-Fernsehempfangsknoten zugeordnet ist;
einen ersten Sender (15) zum Senden einer Authentifizierungsanforderung an einen Dienstzugangsschutzserver, wobei die Authentifizierungsanforderung die Bootstrapping-Transaktionskennung aufweist;
einen zweiten Empfänger (16) zum Empfangen einer Authentifizierungsantwort vom Dienstzugangsschutzserver, wobei die Authentifizierungsantwort einen Langzeitschlüssel aufweist, der dem IP-Fernsehempfangsknoten zugeordnet ist, wobei der Langzeitschlüssel vorher dem IP-Fernsehempfangsknoten zur Verfügung gestellt worden ist;
einen zweiten Sender (17) zum Senden einer Anforderung an einen IP-Fernsehinhaltsanbieterknoten, wobei die Anforderung den IP-Fernsehempfangsknoten angibt;
einen Prozessor (19) zum Verschlüsseln eines Medienverschlüsselungsschlüssels unter Verwendung des empfangenen Langzeitschlüssels; und
einen dritten Sender (20) zum Senden einer Einladungsantwortnachricht an den IP-Fernsehempfangsknoten, wobei die Einladungsantwortnachricht den verschlüsselten Medienverschlüsselungsschlüssel aufweist.

10. Anwendungsserver nach Anspruch 9, ferner umfassend einen dritten Empfänger (18) zum Empfangen einer Nachricht, die den Medienverschlüsselungsschlüssel aufweist, vom IP-Fernsehinhaltsanbieterknoten.

11. Anwendungsserver nach Anspruch 9, wobei der zweite Empfänger dafür eingerichtet ist, den Medienverschlüsselungsschlüssel in der Anforderung an den IP-Fernsehinhaltsanbieterknoten zu senden.

12. Anwendungsserver nach einem der Ansprüche 9 bis 11, wobei der Anwendungsserver ein Mobil-IP-Fernsehanwendungsserver ist und die IP-Fernsehsendung eine Mobil-IP-Fernsehsendung ist.

13. Anwendungsserver nach einem der Ansprüche 9 bis 12, wobei die IP-Fernsehsitzung aus einem der folgenden ausgewählt wird: eine lineare IP-Fernsehrundsendung, eine lineare IP-Fernsehdirektsendung und eine Video-on-Demand-Direktsendung.

14. IP-Fernsehempfangsknoten (1), **dadurch gekennzeichnet, dass** er umfasst:
einen Speicher (23) zum Speichern einer Bootstrapping-Transaktionskennung und eines Langzeitschlüssels, der dem IP-Fernsehempfangsknoten zugeordnet ist;
einen Sender (24) zum Senden einer Einladungsnachricht zum Einleiten einer IP-Fernsehsitzung an einen Anwendungsserver, wobei die Einladungsnachricht die Bootstrapping-Transaktionskennung aufweist;
einen ersten Empfänger (25) zum Empfangen einer Antwortnachricht vom Anwendungsserver, wobei die Antwortnachricht einen Medienverschlüsselungsschlüssel aufweist, der unter Verwendung des Langzeitschlüssels verschlüsselt wurde;
einen ersten Prozessor (26) zum Entschlüsseln des Medienverschlüsselungsschlüssels unter Verwendung des gespeicherten Langzeitschlüssels;
einen zweiten Empfänger (27) zum Empfangen von IP-Fernsehmedieninhalt, der von einem I P-Fernsehinhaltsanbieterknoten gesendet wird, wobei der IP-Fernsehmedieninhalt unter Verwendung des Medienverschlüsselungsschlüssels verschlüsselt wird;
einen zweiten Prozessor (28) zum Entschlüsseln des IP-Fernsehmedieninhalts unter Verwendung des entschlüsselten Medienverschlüsselungsschlüssels.

15. IP-Fernsehempfangsknoten n-ach Anspruch 14, wobei der IP-Fernsehempfangsknoten eine Benutzereinrichtung ist.

## Revendications

1. Procédé d'établissement d'une session de télévision IP sécurisée, le procédé étant **caractérisé en ce qu'**il consiste à :
recevoir (S11 ; S23 ; S47), dans un serveur d'application (9), un message d'invite d'un noeud de réception de télévision IP (1) pour configurer une session de télévision IP, le message d'invite comprenant un identifiant de transaction d'amorçage associé au noeud de réception ;
envoyer (S12 ; S25 ; S48) une demande d'authentification à un serveur de protection d'accès au service, la demande d'authentification comprenant l'identifiant de transaction d'amorçage ;
recevoir (S13 ; S26 ; S40) du serveur de protection d'accès au service une réponse d'authentification, la réponse d'authentification comprenant une clé à long terme associée au noeud de réception de télévision IP, la clé à long terme ayant été précédemment fournie au noeud de réception de télévision IP ;
envoyer (S14 ; S27 ; S50) une demande à un noeud de fournisseur de contenu de télévision IP, la demande identifiant le noeud de réception de télévision IP ;
chiffrer (S16 ; S33 ; S56) une clé de chiffrement de média en utilisant la clé à long terme reçue, la clé de chiffrement de média étant destinée à être utilisée par le noeud de fournisseur de contenu de télévision IP pour chiffrer le média ; et
envoyer (S16a ; S33a ; S56a) un message de réponse à une invite au noeud de réception de télévision IP, le message de réponse à une invite comprenant la clé de chiffrement de média chiffrée.

2. Procédé selon la revendication 1, dans lequel le message d'invite est un message d'invite de protocole de lancement de session, et l'identifiant de transaction d'amorçage est inclus dans un en-tête d'autorisation de serveur mandataire.

3. Procédé selon la revendication 1 ou 2, dans lequel la session de télévision IP est une session de télévision IP mobile, et le serveur d'application est un serveur d'application de télévision IP mobile.

4. Procédé selon la revendication 1, 2 ou 3, dans lequel la session de télévision IP est sélectionnée parmi une diffusion de télévision IP linéaire, une diffusion individuelle de télévision IP linéaire et une diffusion individuelle de vidéo à la demande.

5. Procédé selon l'une quelconque des revendications 1 à 4, dans lequel le serveur de protection d'accès au service est une fonction de serveur d'amorçage.

6. Procédé selon l'une quelconque des revendications 1 à 5, dans lequel la clé de chiffrement de média est sélectionnée parmi une clé de groupe et une clé de contenu.

7. Procédé selon l'une quelconque des revendications 1 à 6, dans lequel la clé de chiffrement de média est envoyée par le serveur d'application au noeud de fournisseur de contenu de télévision IP.

8. Procédé selon l'une quelconque des revendications 1 à 6, dans lequel la clé de chiffrement de média est reçue au niveau du serveur d'application du noeud de fournisseur de contenu de télévision IP.

9. Serveur d'application (9) **caractérisé en ce qu'**il comprend :
un premier récepteur (14) pour recevoir un message d'invite d'un noeud de réception de télévision IP (1) pour configurer une session de télévision IP, le message d'invite comprenant un identifiant de transaction d'amorçage associé au noeud de réception de télévision IP ;
un premier émetteur (15) pour envoyer une demande d'authentification à un serveur de protection d'accès au service, la demande d'authentification comprenant l'identifiant de transaction d'amorçage ;
un deuxième récepteur (16) pour recevoir du serveur de protection d'accès au service une réponse d'authentification, la réponse d'authentification comprenant une clé à long terme associée au noeud de réception de télévision IP, la clé à long terme ayant été précédemment fournie au noeud de réception de télévision IP ;
un deuxième émetteur (17) pour envoyer une demande à un noeud de fournisseur de contenu de télévision IP, la demande identifiant le noeud de réception de télévision IP ;
un processeur (19) pour chiffrer une clé de chiffrement de média en utilisant la clé à long terme reçue ; et
un troisième émetteur (20) pour envoyer un message de réponse à une invite au noeud de réception de télévision IP, le message de réponse à une invite comprenant la clé de chiffrement de média chiffrée.

10. Serveur d'application selon la revendication 9, comprenant en outre un troisième récepteur (18) pour recevoir du noeud de fournisseur de contenu de télévision IP un message comprenant la clé de chiffrement de média.

11. Serveur d'application selon la revendication 9, dans lequel le deuxième émetteur est agencé pour envoyer la clé de chiffrement de média dans la demande au noeud de fournisseur de contenu de télévision IP.

12. Serveur d'application selon l'une quelconque des revendications 9 à 11, dans lequel le serveur d'application est un serveur d'application de télévision IP mobile et la session de télévision IP est une session de télévision IP mobile.

13. Serveur d'application selon l'une quelconque des revendications 9 à 12, dans lequel la session de télévision IP est sélectionnée parmi une diffusion de télévision IP linéaire, une diffusion individuelle de télévision IP linéaire et une diffusion individuelle de vidéo à la demande.

14. Noeud de réception de télévision IP (1) **caractérisé en ce qu'**il comprend :
une mémoire (23) pour mémoriser un identifiant de transaction d'amorçage et une clé à long terme associée au noeud de réception de télévision IP ;
un émetteur (24) pour envoyer à un serveur d'application un message d'invite pour lancer une session de télévision IP, le message d'invite comprenant l'identifiant de transaction d'amorçage ;
un premier récepteur (25) pour recevoir du serveur d'application un message de réponse, le message de réponse comprenant une clé de chiffrement de média chiffrée en utilisant la clé à long terme ;
un premier processeur (26) pour déchiffrer la clé de chiffrement de média en utilisant la clé à long terme mémorisée ;
un deuxième récepteur (27) pour recevoir un contenu de média de télévision IP envoyé par un noeud de fournisseur de contenu de télévision IP, le contenu de média de télévision IP étant chiffré en utilisant la clé de chiffrement de média ;
un deuxième processeur (28) pour déchiffrer le contenu de média de télévision IP en utilisant la clé de chiffrement de média déchiffrée.

15. Noeud de réception de télévision IP selon la revendication 14, dans lequel le noeud de réception de télévision IP est un équipement d'utilisateur.
